# EUROPEAN PATENT APPLICATION

(11) **EP 4 654 446 A1**
(43) Date of publication of application: **26.11.2025**
(21) Application number: 25175684.7
(22) Date of filing: 12.05.2025
(51) Int. Cl.: H02K 11/33, H02K 11/40, H02K 5/06

(54) **AN ELECTRIC PUMP WITH A CONTACT ELEMENT FOR ELECTRICAL GROUDING**

(30) Priority: 24.05.2024 FR 2405299
(71) Applicant: VALEO EMBRAYAGES, 80009 Amiens (FR)
(72) Inventor: OSTROHOV, Dimitri, 96106 Ebern (DE); SAUTER, Anton, 96106 Ebern (DE); MUTHIG, Sebastian, 96106 Ebern (DE)
(74) Representative: Valeo Powertrain Systems

(57) **Abstract**

The present subject matter relates to an electric pump (100) for automobile including a driving device (10), a pump device (50), a control substrate (30), a housing (111) and a contact element (20). The driving device (10) having a rotor (12) rotatable about an axis X and a stator (11). The pump device (50) is driven by the driving device (10). The housing (111) is accommodating at least the driving device (10), the control substrate (30) and the pump device (50), the housing (111) being formed at least of a conductive material. The control substrate (30) with a drive circuit for controlling the driving device (10) and a grounding lead. Further, the contact element (20) made of one conductor electrically connects the stator (11), the grounding lead of the control substrate (30) and the conductive material of the housing (111).

## Description

The present subject matter relates to an electric pump particularly to an electric pump with a contact element more suitable for electrical grounding particularly used for automobile.

In general, vehicle such as an automobile is equipped with an electric pump. The electric pump is provided with various components like a driving device, a control substrate, a pump device driven by the driving device, and a housing. The driving device is powered by an external power source and controlled by a control substrate.

Often in the electric pump, the driving device is an electric motor having a stator and a rotor. The electromagnetic field generated in the stator affects the electronic components of the control substrate. In order to protect the control substrate from the electromagnetic field and to fulfil the low electromagnetic compatibility regulation, it is known to connect the stator to a low electrical resistance path, so that an electrical connection is established to a grounding potential. This is known as an Electro Magnetic Compatibility.

In certain circumstances, the conductive material of the housing for covering the control substrate or the control substrate itself generates a static electric current that has the potential to affect the performance of the electronic components like sensors in the control substrate and makes the electronic components to deviate from its intended functioning. In order to protect the electronic components of the control substrate from the static electric current generated, it is known to suppress the static electric current generated by connecting the control substrate to the low electrical resistance path, so that the static electric current is discharged to the grounding potential. This is known as an Electro Static Discharge.

The electric pump for automobile is compact in arrangement. Having a grounding facility in the compact arrangement is challenging. In such electric pump it is necessary to create an electrical grounding connections for removing a static electric current and ensuring Electro Magnetic Compatibility and Electro Static Discharge path. Many prior arts addresses the Electro Static Discharge path and the grounding for the Electro Magnetic Compatibility of the electric pump. In automobile many other components having a motor and the control substrate like clutch actuators, disconnect actuators, park-lock actuators are in need of an electrical grounding connections for removing a static electric current and ensuring Electro Magnetic Compatibility and Electro Static Discharge path. In most cases they are complex connections for Electro Magnetic Compatibility and Electro Static Discharge leading to complex assembly and increased assembly process thereby increasing the assembly time and the cost.

Therefore there is a need to solve the technical problem associated with the assembly explained above.

It is accordingly an object of the present arrangement to provide an assembly, which overcomes the above mentioned and other disadvantages of the known arrangements and provide an electric pump maintaining an electrical grounding by means of a contact element made of one conductor.

The present arrangement relates to an electric pump for automobile comprising a driving device having a rotor rotatable about an axis X and a stator, a pump device is being driven by the driving device, a control substrate having a drive circuit for controlling the driving device and a grounding lead, a contact element made of one conductor, a housing accommodating at least the driving device, the control substrate and the pump device, the housing being formed at least of a conductive material. According to the invention, the contact element electrically connects the stator, the grounding lead of the control substrate and the conductive material of the housing.

One advantage of having the contact element configured as one conductor is to create an integrated grounding path for the stator and the grounding lead of the control substrate with the conductive material of the housing.

The Integrated grounding path for the flow of static electric current is defined by combining two individual functions of providing an electrical connection for an Electro Magnetic Compatibility (Herein after referred as EMC throughout the description) from the stator and an Electro Static Discharge (Herein after referred as ESD throughout the description) path from the grounding lead of the control substrate with the conductive material of the housing of the electric pump by means of the contact element made of one conductor. The EMC connection is between the stator and the grounding lead of the control substrate to the conductive material of the housing. The ESD connection is between the grounding lead of the control substrate and the conductive material of the housing.

Consequently, which reduces the space occupied, the manufacturing cost, the logistics and the assembly cost associated with the parts for making complex connections for the EMC connection and the ESD path, thereby reducing the assembly time.

According to an aspect of the arrangement, the contact element has a first base extending at least partially in a plane P1 connecting the stator electrically, a second base extending at least partially in a plane P2 connecting the grounding lead of the control substrate electrically and a third base extending at least partially in a plane P3 connecting with the conductive material of the housing electrically, the planes P1, P2 and P3 are parallel with each other. Accordingly, the control element is configured to be elastically deformable that stores the energy and dampen the mechanical vibration thereby improving a mechanical press fitting contact and creating an integrated grounding path for the stator and the grounding lead of the control substrate with the conductive material of the housing.

According to another aspect of the arrangement, the second base has at least one wing. Accordingly the contact element having the at least one wing increases the surface area of the contact element on the control substrate for improved mechanical support.

According to another aspect of the arrangement, at least parts of the first base, the second base and the third base are one above the other. Accordingly the overall space required to accommodate the control element is reduced.

According to another aspect of the arrangement, the first base and the third base are offset with each other. Accordingly by virtue of this offset arrangement between the first base and the third base of the contact element, the surface area of the second base of the contact element on the control substrate increases thereby providing an improved mechanical support.

According to another aspect of the arrangement, the control substrate having a grounding pattern connecting with the grounding lead of the control substrate. Accordingly the grounding pattern having connection with the grounding lead facilitates the flow of static electric current from different part of the circuits in the control substrate.

According to another aspect of the arrangement, the housing has a housing body made of at least partially of insulating material and a cover body made at least partially of the conductive material. Accordingly the cover body formed of the conductive material for grounding the static electric current from the grounding lead of the control substrate and the electromagnetic field generated from the stator.

According to another aspect of the arrangement, the conductive material of the cover body comprising a cover pin, the cover pin connects the contact element. Accordingly the cover pin projecting from the cover body, guides and simplify the assembly process.

According to another aspect of the arrangement, the electrical connection between the grounding lead and the contact element is a soldering or a mechanical contact. Accordingly the movement or any change in the position of the contact element is eliminated as the contact element is firmly fixed with the grounding lead of the control substrate, thereby improving the mechanical support and for an electrical connection.

According to another aspect of the arrangement, the contact element and the stator are being connected by welding. Accordingly the movement or any change in the position of the contact element is eliminated as the contact element is firmly fixed with the stator, thereby improving the mechanical support.

According to another aspect of the arrangement, the contact element having a double Z or S shape.

According to another aspect of the arrangement, the stator having at least one pin for electrically connecting with the contact element. Accordingly by virtue of the at least one pin of the stator guides and simplify the assembly process.

The present arrangement can be better understood with reference to the following description and drawings. The components in the figures are not necessarily to scale, emphasis instead being placed upon illustrating the principles of the arrangement. Moreover, in the figures, like reference numerals designate corresponding parts. In the drawings:
[Figure 1] illustrates a cut-section of an electric pump with a contact element, configured in accordance with the present subject matter;
[Figure 2] illustrates a cut-section of another arrangement of the electric pump with the contact element, configured in accordance with the present subject matter.
[Figure 3A] illustrates a perspective view of a first embodiment of the contact element configured in accordance with the present subject matter.
[Figure 3B] illustrates a cut-section of the first embodiment of the contact element arranged with the control substrate, configured in accordance with the present subject matter.
[Figure 3C] illustrates a cut-section of an arrangement of the first embodiment of the contact element arranged with the control substrate, the stator and the conductive material of the housing, configured in accordance with the present subject matter.
[Figure 4A] illustrates a perspective view of a second embodiment of the contact element configured in accordance with the present subject matter.
[Figure 4B] illustrates a cut-section of the second embodiment of the contact element arranged with the control substrate, configured in accordance with the present subject matter.
[Figure 4C] illustrates a cut-section of another arrangement of the second embodiment of the contact element arranged with the control substrate, the stator and the conductive material of the housing, configured in accordance with the present subject matter.
[Figure 5] illustrates a perspective view of the first embodiment of the contact element arranged with the control substrate, configured in accordance with the present subject matter.
[Figure 6] illustrates a perspective view of the second embodiment of the contact element arranged with the control substrate, configured in accordance with the present subject matter.

In the description that follows, reference is made to accompanying drawings, which form part thereof, and in which is shown by way of illustration specific implementations in which the invention may be practiced. These implementations are described in sufficient detail to enable that skilling in the art to practice the invention, and it is to be understood that the implementations may be combined, or that other implementations may be utilized, and that structural and logical changes may be made without departing from the scope of the present invention. The following detailed description is, therefore, not to be taken in a limiting sense, and the scope of the present invention is defined by the appended claims and their equivalents. Further the grounding lead, the grounding pattern and the cover pin are not shown in the figures illustrated.

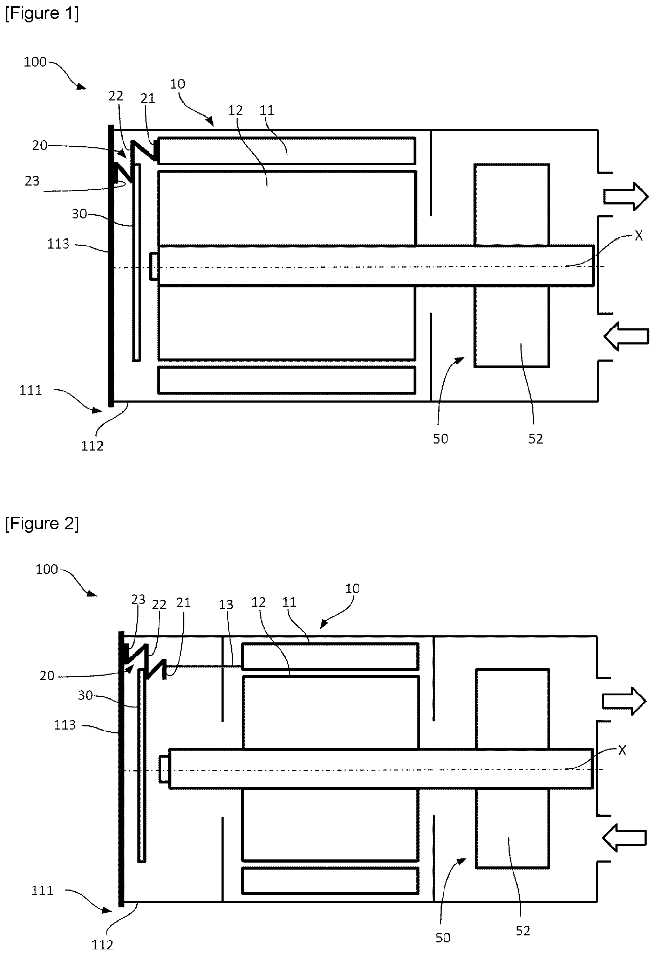

[Figure 1] illustrates a cut-section of an electric pump with a contact element, configured in accordance with the present subject matter and [Figure 2] illustrates a cut-section of another arrangement of the electric pump with the contact element, configured in accordance with the present subject matter.

The description herein pertains to [Figure 1] and [Figure 2] described in a common manner for the sake of brevity.

The electric pump 100 with a contact element 20, configured in accordance with the present subject matter includes a driving device 10, a pump device 50, and a control substrate 30 that are mounted on a housing 111. The electric pump 100 is used to circulate a fluid in an automobile. In a non-limiting example, the fluid is an oil used in transmission of the automobile.

The driving device 10 is configured as an internal rotor motor arrangement which includes a stator 11 and a rotor 12. The rotor 12 is received within the stator 11 leaving an annular gap facilitating rotation of the rotor 12 about an axis X. The rotor 12 is mounted on a rotor shaft. The stator 11 further includes at least one pin 13 as illustrated in [Figure 2]. The at least one pin 13 of the stator 11 is a projection from the stator 11 as a one piece. In another example the at least one pin 13 of the stator 11 is a separate part fixed to the stator 11 by means of welding or by connecting in a mechanical means. The pump device 50 includes an impeller 52. The pump device 50 is in drive connection with the rotor 12. The drive connection implies that the rotor 12 of the driving device 10 and the impeller 52 of the pump device 50 are coaxially aligned and in a non- limiting example the impeller 52 is assembled on the rotor shaft of the driving device 10. The driving device 10 drives the impeller 52 of the pump device 50. In an example the electric pump is a gerotor pump or a vane pump or a gear pump.

The control substrate 30 is having an insulating substrate provided with conductive paths connecting various electronic components, a drive circuit (not shown) provided to control the driving device, and a grounding pattern (not shown) and an associated electrical connection (not shown) to distribute the required power supply to the driving device 10. The control substrate 30 further includes a grounding lead (not shown). In one example the grounding lead (not shown) is in an electrical connection with the grounding pattern (not shown). The grounding pattern (not shown) is disposed on the control substrate 30 providing a path for the flow of static electric current from different part of the circuits in the control substrate 30.

The housing 111 is formed at least of a conductive material and configured with individual portions to accommodate the driving device 10, the pump device 50 and the control substrate 30 individually. In a non-limiting example as illustrated in [Figure 1], the housing 111 is configured with a housing body 112 and a cover body 113. The housing body 112 includes a driving device portion and a pump portion. The driving device portion accommodating the driving device 10 and the control substrate 30 along with the contact element 20 and the pump portion accommodating the pump device 50. In yet another example the housing body 112 is made of at least partially of insulating material and the cover body 113 is made at least partially of the conductive material. In yet another example the cover body 113 has a cover pin (not shown) that connects electrically with the contact element 20. The cover pin is integrated with cover body 113 of the housing 111 as a one piece. In another example the cover pin is a separate part fixed to the cover body 113 by means of welding or by connecting in a mechanical means.

In a non-limiting example the conductive material of the housing 111 is preferably an aluminum or a steel. However, the conductive material can be made of other materials provided that the material has a certain degree of electrical conductivity.

The contact element 20 is configured as one conductor and is in electrical connection with the stator 11, the grounding lead of the control substrate 30 and the conductive material of the housing 111 constituting an integrated grounding path for the stator 11 and the grounding lead of the control substrate 30 with the conductive material of the housing 111 of the electric pump 100.

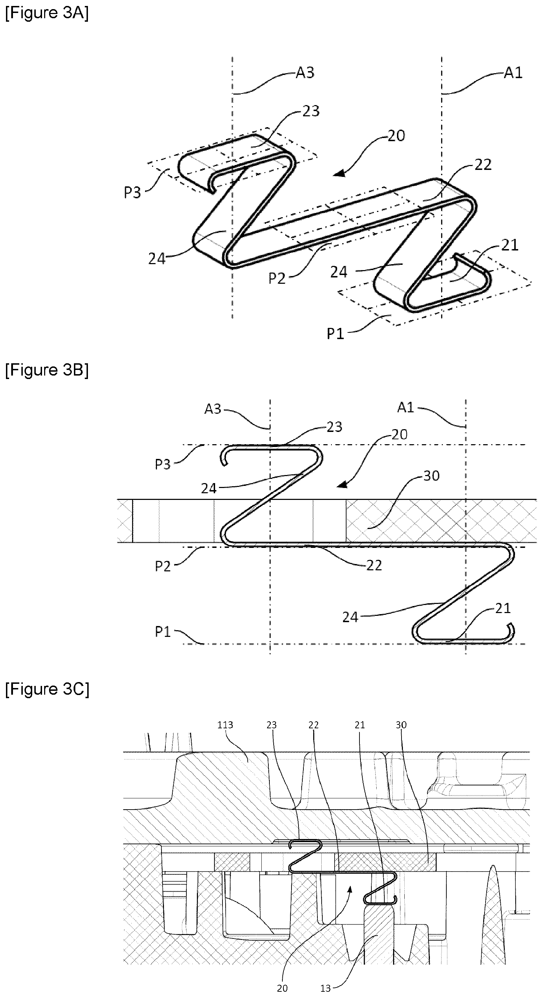

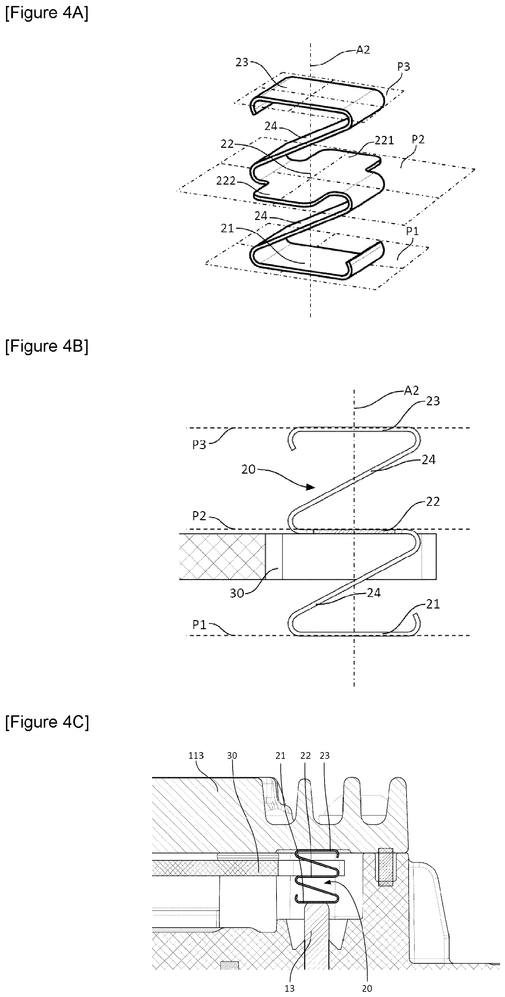

[Figure 3A] illustrates a perspective view of a first embodiment of the contact element 20, [Figure 3B] illustrates a cut-section of the first embodiment of the contact element 20 arranged with the control substrate 30, [Figure 4A] illustrates a perspective view of a second embodiment of the contact element 20, [Figure 4B] illustrates a cut-section of the second embodiment of the contact element 20 arranged with the control substrate 30, configured in accordance with the present subject matter.

The description herein pertains to [Figure 3A], [Figure 3B], [Figure 4A] and [Figure 4B] described in a common manner for the sake of brevity.

The contact element 20 is made of one conductor having conductivity for example, a metal element. In a non-limiting example the metal element is a stainless steel having a spring properties. The spring property implies that the metal element is capable of storing the energy and dampen the mechanical vibrations by elastically deforming. However, the contact element 20 can be made of other elements provided that the element has the spring property. In an example, the contact element 20 is formed by bending the metal element in a configuration in accordance with the present subject matter. Thus the manufacturing of the contact element 20 is simpler. In an example the metal element is a metal strip.

The contact element 20 has a first base 21, a second base 22 and a third base 23. The first base 21 extends at least partially in a plane P1, the second base 22 extends at least partially in a plane P2 and a third base 23 extending at least partially in a plane P3. The planes P1, P2 and P3 are parallel to one another. Such that the first base 21 extending in the plane P1, the second base 22 extending in the plane P2 and the third base 23 extending in the plane P3 are disposed one above the other.

The first base 21 is intended to have a first electrical connection with the stator 11, in a non-limiting example conductive material of the stator 11. The second base 22 is intended to have a second electrical connection with the grounding lead of the control substrate 30. The third base 23 is intended to have a third electrical connection with the conductive material of the housing 111. In another example the first base 21 is intended to have a first electrical connection with the at least one pin 13 of the stator 11,

According to the preferred example, the contact element 20 is assembled to have an electrical connection between the stator 11, the grounding lead of the control substrate 30 and the conductive material of the housing 111. In one method of mounting, the contact element 20: the second base 22 of the contact element 20 is soldered with the grounding lead of the control substrate 30. Accordingly, when the contact element 20 is assembled as described above, the first base 21 is pressed against the at least one pin 13 of the stator 11 and therefore comes to be applied with a thrust force against the at least one pin 13 of the stator 11 as seen according to the [Figure 3C] and [Figure 4C].

In a similar way, the third base 23 is pressed against the conductive material of the cover body 113 of the housing 111 and therefore comes to be applied with a thrust force against the conductive material of the cover body 113 of the housing 111 as seen according to the [Figure 3C] and [Figure 4C].

In a non-limiting arrangement, the thrust force by the first base 21 is applied against the stator 11 directly. In another arrangement, the thrust force by the third base 23 is applied against the cover pin (not shown) of the cover body 113.

Consequently, one of the mechanical press fit of the contact element 20 is created between the control substrate 30 and the stator 11 and the other mechanical press fit of the contact element 20 is between the control substrate 30 and the housing 111 by the elastic deformation of the contact element 20. Thus, the electrical connection of the contact element 20 with the stator 11, the grounding lead of the control substrate 30 and the conductive material of the housing 111 is ensured by the mechanical press fit.

In an example the first electrical connection by the first base 21 with the stator 11, the second electrical connection by the second base 22 with the grounding lead of the control substrate 30, and the third electrical connection by the third base 23 with the conductive material of the housing 111 are made by means of the mechanical press fit ensuring a temporary connection.

In another example at least one of the electrical connection is permanently connected while the other two electrical connections are temporarily connected. In an non-limiting example as described above the second electrical connection by the second base 22 with the grounding lead of the control substrate 30, is permanently connected while the other two electrical connections: the first electrical connection by the first base 21 with the stator 11 and the third electrical connection by the third base 23 with the conductive material of the housing 111 are temporarily connected.

The electrical connection is established between the stator 11 and the grounding lead of the control substrate 30 via the first base 21 and the second base 22 which thereby improves the EMC of the electric pump 100.

In one example the static electric current from the control substrate 30 flows via the second base 22 and the third base 23 to the conductive material of the housing 111 and that constitutes the ESD path from the grounding lead of the control substrate 30.

Accordingly the above described arrangement constitutes the integrated grounding path for the flow of static electric current by combining two individual functions of providing the electrical connection for the EMC from the stator 11 and the ESD path from the grounding lead of the control substrate 30 with the conductive material of the housing 111 of the electric pump 100 by means of the contact element 20 made of one conductor

In an embodiment the first base 21 and the third base 23 are offset with each other. [Figure 3A], [Figure 3B] and [Figure 3C] illustrates such an embodiment.

As illustrated in [Figure 3A] and [Figure 3B], the first base 21 and the third base 23 are offset with each other. The first base 21 extending in the plane P1 has a first axis A1 that extends normal to the first base 21, in a similar configuration, the third base 23 extending in the plane P3 has a third axis A3 that extends normal to the third base 23. The first axis A1 and the third axis A3 are in parallel with each other in other words the first axis A1 and the third axis A3 are not coaxial. The first axis A1 is at a distance from the third axis A3. The offset arrangement is defined by the distance between the first axis A1 and the third axis A3.

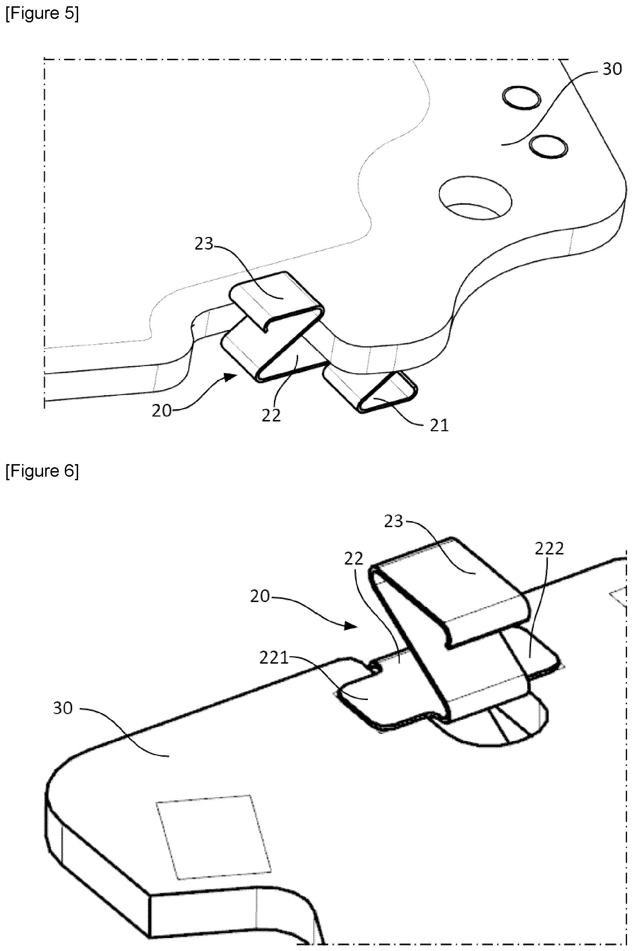

[Figure 5] illustrates such an offset arrangement of the contact element 20. The second base 22 of the contact element 20 is placed on the control substrate 30. In an example (not shown) the second base 22 is electrically connected with the grounding lead of the control substrate 30 by a soldering for a permanent connection.

[Figure 3C] illustrates a cut-section of an arrangement of the first embodiment of the contact element 20 arranged with the control substrate 30, the stator 11 and the conductive material of the housing 111, configured in accordance with the present subject matter. In a non-limiting example as illustrated in [Figure 3C], the control substrate 30 is placed in between the stator 11 (not shown in [Figure 3C]) and the cover body 113. The contact element 20 is disposed in between the stator 11 (not shown in [Figure 3C]) and the cover body 113 ensuring the mechanical press fit such that the first base 21 is in electrical connection with the at least one pin 13 of the stator 11 (not shown in [Figure 3C]) and the third base 23 is in electrical connection with the conductive material of the cover body 113 and the second base 22 is in electrical connection with the grounding lead of the control substrate 30.

In an embodiment, the first base 21, the second base 22 and the third base 23 are one above the other and the second base 22 has at least one wing 221. [Figure 4A], [Figure 4B] and [Figure 4C] illustrates such an embodiment.

As illustrated in [Figure 4A] and [Figure 4B], the second base 22 extending in the plane P2 has a first wing 221 and a second wing 222 that extends in the plane P2 from the second base 22. The first base 21, the second base 22 and the third base 23 are one above the other and has a second axis A2 that extends normal to the first base 21, the second base 22 and the third base 23. In other words, the first base 21, the second base 22 and the third base 23 are coaxial with the second axis A2.

[Figure 6] illustrates such an embodiment of the contact element 20. The second base 22 of the contact element 20 has the first wing 221 and the second wing 222. The first wing 221 and the second wing 222 are placed on the control substrate 30. In an example (not shown) the first wing 221 and the second wing 222 of the second base 22 is electrically connected with the grounding lead of the control substrate 30 by the soldering for the permanent connection.

[Figure 4C] illustrates a cut-section of an arrangement of the second embodiment of the contact element 20 arranged with the control substrate 30, the stator 11 and the conductive material of the housing 111, configured in accordance with the present subject matter. In a non-limiting example as illustrated in [Figure 4C], the control substrate 30 is placed in between the stator 11 (not shown in [Figure 4C]) and the cover body 113. The contact element 20 is disposed in between the stator 11 (not shown in [Figure 4C]) and the cover body 113 ensuring the mechanical press fit such that the first base 21 is in electrical connection with the at least one pin 13 of the stator 11(not shown in [Figure 4C]) and the third base 23 is in electrical connection with the conductive material of the cover body 113 and the second base 22 is in electrical connection with the grounding lead of the control substrate 30.

In an example at least the first base 21 of the contact element 20 is permanently connected with the stator 11 by the welding, while the second base 22 is temporarily connected by the mechanical press fit with the grounding lead of the control substrate 30 and the third base 23 is temporarily connected by the mechanical press fit with the conductive material of the housing 111. In a non-limiting example the first base 21 is permanently connected with the at least one pin 13 of the stator 11 by welding. In yet another example the third base 23 is temporarily connected with the conductive material of the cover body 113 of the housing 111. In yet another example the third base 23 is temporarily connected with the cover pin of the cover body 113.

In another example at least the second base 22 of the contact element 20 is permanently connected with the grounding lead of the control substrate 30 by a soldering while the first base 21 is temporarily connected by the mechanical press fit with the stator 11 and the third base 23 is temporarily connected by the mechanical press fit with the conductive material of the housing 111. In a non-limiting example the first base 21 is temporarily connected by the mechanical press fit with the at least one pin 13 of the stator 11. In another example the third base 23 is temporarily connected by the mechanical press fit with the conductive material of the cover body 113 of the housing 111. In yet another example the third base 23 is temporarily connected by the mechanical press fit with the cover pin of the cover body 113

However, combination of the above arrangement is possible, accordingly at least one of the electrical connection is permanently connected while the other two electrical connections are temporarily connected.

In a non-limiting example as shown in [Figure 1] to [Figure 6] the contact element 20 is configured to have an integrally formed double Z shape in which the first Z shape has the third base 23 in the plane 3 and the second base 22 in the plane P2, whereas the second Z shape extends integrally from the second base 22 in the plane 2 and has the first base 21 in the plane P1 to form the second Z shape, when seen in a lateral direction. In other words, the second base 22 in the plane P2 forms a common part for the double Z shape. The first base 21 and the second base 22 are connected by having a connecting element 24 which extends being inclined at an angle with the plane P1 and P2, in a similar configuration, the second base 22 and the third base 23 are connected. In an embodiment that is not shown the connecting element 24 extends normal to the plane P1 to form an S shape of the contact element 20. However, the connecting element 24 may have any shape as long as it is configured to apply the thrust force thereto with a determined compression. Such that the contact element 20 applies the thrust force thereto with the determined amount of compression in between stator 11 and the grounding lead of the control substrate 30 and in between the grounding lead of the control substrate 30 and the conductive material of the housing 111.

**However,** the control element 20 may have any shape within the scope of the invention provided that it forms an integral grounding path by making the electrical connection with the stator 11, the grounding lead of the control substrate 30 and the conductive material of the housing 111 for providing the electrical connection for the EMC and the ESD path. By virtue of elastically deforming to store the energy and dampen the mechanical vibration thereby improving the mechanical press fitting contact and securing the contact of the contact element 20 in between the stator 11, the control substrate 30 and the conductive material of the housing 111.

## Claims

1. An electric pump (100) for automobile comprising:
a driving device (10) having a rotor (12) rotatable about an axis X and a stator (11);
a pump device (50) is being driven by the driving device (10);
a control substrate (30) having a drive circuit for controlling the driving device (10) and a grounding lead;
a contact element (20) made of one conductor;
a housing (111) accommodating at least the driving device (10), the control substrate (30) and the pump device (50), the housing (111) being formed at least of a conductive material;
**characterized in that** the contact element (20) electrically connecting the stator (11), the grounding lead of the control substrate (30) and
the conductive material of the housing (111).

2. Electric pump (100) according to claim 1, wherein the contact element (20) has a first base (21) extending at least partially in a plane P1 connecting the stator (11) electrically, a second base (22) extending at least partially in a plane P2 connecting the grounding lead of the control substrate (30) electrically and a third base (23) extending at least partially in a plane P3 connecting with the conductive material of the housing (111) electrically, the planes P1, P2 and P3 are parallel with each other.

3. Electric pump (100) according to claim 2, wherein the second base (22) has at least one wing (221).

4. Electric pump (100) according to claim 2 or 3, wherein at least parts of the first base (21), the second base (22) and the third base (23) are one above the other.

5. Electric pump (100) according to claim 2 or 3, wherein the first base (21) and the third base (23) are offset with each other.

6. Electric pump (100) according to one of the preceding claims, wherein the control substrate (30) having a grounding pattern connecting with the grounding lead of the control substrate (30).

7. Electric pump (100) according to one of the preceding claims, wherein the housing (111) has a housing body (112) made of at least partially of insulating material and a cover body (113) made at least partially of the conductive material.

8. Electric pump (100) according to claim 7, wherein the conductive material of the cover body (113) comprising a cover pin, the cover pin connects the contact element (20).

9. Electric pump (100) according to one of the preceding claims, wherein the electrical connection between the grounding lead and the contact element (20) is a soldering or a mechanical contact.

10. Electric pump (100) according to one of the preceding claims, wherein the contact element (20) and the stator (11) are being connected by welding.

11. Electric pump (100) according to any one of the claim 2 to 4, wherein the contact element (20) having a double Z or S shape

12. Electric pump (100) according to any one of the claims 1 to 11, wherein the stator (11) having at least one pin (13) for electrically connecting with the contact element (20). I
